# EUROPEAN PATENT APPLICATION

(11) **EP 4 621 964 A1**
(43) Date of publication of application: **24.09.2025**
(21) Application number: 23907335.6
(22) Date of filing: 11.10.2023
(51) Int. Cl.: H01M 50/298, H01M 50/296, H01M 50/204, H01M 50/502

(54) **BATTERY PACK AND BATTERY DEVICE COMPRISING SAME**

(30) Priority: 19.12.2022 KR 20220178489
(71) Applicant: LG Energy Solution, Ltd., Seoul 07335 (KR)
(72) Inventor: YOON, Sang Hyun, Daejeon 34122 (KR)
(74) Representative: Plasseraud IP
(86) International application number: PCT/KR2023/015644
(87) International publication number: WO 2024/136049

(57) **Abstract**

The present invention relates to a battery pack and a battery device including the same, and more particularly, to a battery pack, which is capable of preventing an interference between a cable part and a housing part, and
a battery device including the same, and the battery pack according to an embodiment of the present invention includes a cable part, a connector part having one end to which the cable part is connected, a housing part on which the connector part is mounted, and a seating part configured to fix a position of the cable part, wherein the cable part extends between the connector part and an inner surface of the housing part, and the seating part is disposed inside the housing part and configured to support one side of the cable part that faces the inner surface of the housing part so as to prevent an interference between the inner surface of the housing part and the cable part.

## Description

### TECHNICAL FIELD

### CROSS-REFERENCE TO RELATED APPLICATION

The present application claims the benefit of the priority of Korean Patent Application No. 10-2022-0178489, filed on December 19, 2022, which is hereby incorporated by reference in its entirety.

### TECHNICAL FIELD

The present invention relates to a battery pack and a battery device including the same, and more particularly, to relates a battery pack that is capable of preventing an interference between a cable part and a housing part and a battery device including the same.

### BACKGROUND ART

A battery pack is a device that combines several battery cells into one part to protect the battery cells from a physical impact of external environments and perform a specific role. Representative examples of the battery pack include rechargeable batteries installed in smartphones, walkie-talkies, laptop computers, and wireless models.

A cable for combining outputs of a plurality of batteries accommodated in the battery pack may exist inside the battery pack. The cable provides an electrical path through which current flows inside the battery pack. When the cable interferes with other parts inside the battery pack or is damaged as a result, it may lead to permanent damage of the battery pack or a safety accident. That is, depending on the usage environments of the battery pack, when the battery pack is used to be exposed to the outside, there is a possibility that connection is released, or short circuit occurs due to continuous impact and vibration, resulting in fire or explosion of the battery, and the cable interferes due these phenomena. Thus, there is a need for a technology that is capable of preventing an interference between the battery pack and the cable by stably disposing the cable inside the battery pack.

The above-described background art is possessed or acquired by the inventor in the process of deriving the disclosure of the present application, and may not be necessarily said to be known technology disclosed to the general public before the present application.

### DISCLOSURE OF THE INVENTION

### TECHNICAL PROBLEM

The present invention is devised to solve the above problem, and
an object according to an embodiment of the present invention is to provide a battery pack in which an interference between a housing part and a cable part is prevented.

An object according to an embodiment of the present invention is to provide a battery pack in which movement of a cable part within the battery pack is prevented.

An object according to an embodiment of the present invention is to provide a battery pack in which a stable electrical connection state is maintained.

### TECHNICAL SOLUTION

A battery pack according to an embodiment of the present invention includes a cable part, a connector part having one end to which the cable part is connected, a housing part on which the connector part is mounted, and a seating part configured to fix a position of the cable part, wherein the cable part extends between the connector part and an inner surface of the housing part, and the seating part is disposed inside the housing part and configured to support one side of the cable part that faces the inner surface of the housing part so as to prevent an interference between the inner surface of the housing part and the cable part.

The cable part may be seated on the seating part and is spaced apart from the inner surface of the housing part.

The battery pack may further include a connector frame protruding from the inner surface of the housing part and configured to support one end of the connector part.

The connector part may include a channel body through which a wire connected to the battery passes, and a flange extending from an outer surface of the channel body to overlap the connector frame so as to be supported by the connector frame.

The seating part may protrude from an inner surface of the connector frame.

The connector frame may include: a first frame configured to support one end of the flange; and a second frame configured to support the other end of the flange.

The seating part may protrude from one surface of the first frame in a direction facing the second frame.

The seating part may be spaced a predetermined distance from the inner surface of the housing part.

The cable part may extend from one end of the connector part so as to be bent in a direction facing the first frame and is supported by one surface of the seating part facing the connector part.

The seating part may include a main support plate that is in contact with a portion of the cable part to support the cable part so that the cable part is spaced apart from the inner surface of the housing part, and an edge support plate disposed on each of both ends of the main support plate to prevent the cable part from being separated laterally from the cable part.

A battery pack according to an embodiment of the present invention includes a connector part having one end on which a first electrode terminal and a second electrode terminal are provided, a cable part comprising a first cable extending from the first electrode terminal and a second cable extending from the second electrode terminal, a housing part on which the connector part is mounted, and a seating part configured to electrically connect the first cable to the second cable and fix a position of the cable part, wherein the cable part may extend between the connector part and the seating part.

The seating part may include a busbar mounted on an inner surface of the housing part.

A battery pack may be prepared as a battery device according to the present invention, and the battery device according to the present invention may include the battery pack reviewed above as a power source.

### ADVANTAGEOUS EFFECTS

In the battery pack according to the embodiment of the present invention, the interference between the housing part and the cable part may be prevented.

In the battery pack according to the embodiment of the present invention, the movement of the cable part inside the battery pack may be prevented.

In the battery pack according to the embodiment of the present invention, the position of the cable part inside the battery pack may be firmly fixed.

In the battery pack according to the embodiment of the present invention, the stable electrical connection state may be maintained.

In the battery pack according to the embodiment of the present invention, even when the space between the connector part and the housing part is narrowed, the cable part may be stably disposed.

In addition to this, effects that can be easily predicted by a person skilled in the art from the configurations according to embodiments of the present invention may be included.

### BRIEF DESCRIPTION OF THE DRAWINGS

FIG. 1 is a perspective view of a battery pack according to Embodiment 1 of the present invention.
FIG. 2 is a view of the battery pack, taken along line A-A of FIG. 1 according to Embodiment 1 of the present invention.
FIG. 3 is a front view illustrating a cable part of the battery pack and a shape of the cable part according to Embodiment 1 of the present invention.
FIG. 4 is a partial perspective view illustrating a state in which the cable part of the battery pack is seated on a seating part according to Embodiment 1 of the present invention.
FIG. 5 is a side view illustrating a state in which the cable part of the battery pack is seated on the seating part when viewed from the side according to Embodiment 1 of the present invention.
FIG. 6 is a partial perspective view of a battery pack according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. The following description is one of several aspects of embodiments, and in descriptions of the present invention, detailed descriptions related to well-known functions or configurations will be ruled out in order not to unnecessarily obscure subject matters of the present invention.

When adding reference numerals to components in each drawing in this specification, identical or similar reference numerals are used for identical or similar components throughout the specification. Components included in one embodiment and components including common functions will be described using the same names in other embodiments. The terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

In addition, the present invention is not limited to the above-described embodiments, and various modifications and variations are possible from these descriptions by those skilled in the art to which the present invention pertains. Therefore, the spirit of the present invention should not be limited to the above-described embodiments, and not only the claims to be described later, but also all those with equivalent or equivalent modifications to the claims belongs to the scope of the spirit of the present invention.

### Embodiment 1

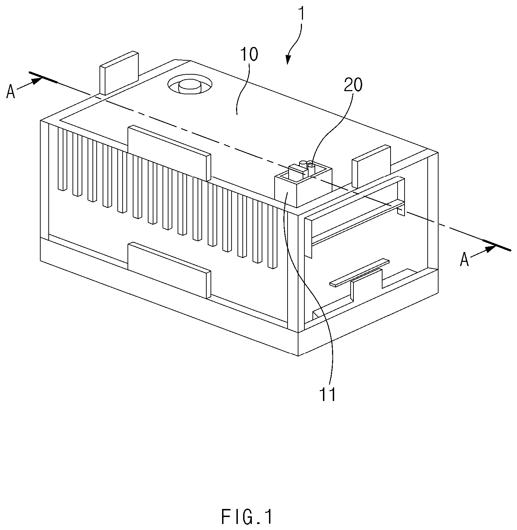

FIG. 1 is a perspective view of a battery pack 1 according to Embodiment 1 of the present invention.

Referring to FIG. 1, the battery pack 1 according to Embodiment 1 of the present invention may include a housing part 10 and a connector part 20.

A plurality of batteries (not shown) may be accommodated in the housing part 10. The plurality of batteries accommodated in the housing part 10 may be electrically connected so that outputs of the plurality of batteries are combined. An internal cavity in which the plurality of batteries are accommodated may be provided in the housing part 10. The housing part 10 may be provided with a fixing device (not shown) capable of fixing the plurality of batteries accommodated therein.

The connector part 20 may be mounted on the housing part 10. The connector part 20 may be mounted on the housing part 10 and may combine the outputs of the plurality of batteries accommodated inside the housing part 10. The connector part 20 may be electrically connected to each of the plurality of batteries. The connector part 20 may be inserted into the housing part 10, and a portion of the connector part 20 may protrude to the outside of the housing part 10. A portion of the connector part 20 protruding to the outside of the housing part 10 may be electrically connected to an external device. For example, a portion of the connector part 20 protruding to the outside of the housing part 10 may be connected to an external device that diagnoses an electrical state of the plurality of batteries. A connector guard 11 that protects the protruding portion of the housing part 10 may be disposed at one side of the housing part 10 on which a portion of the connector part 20 protrudes.

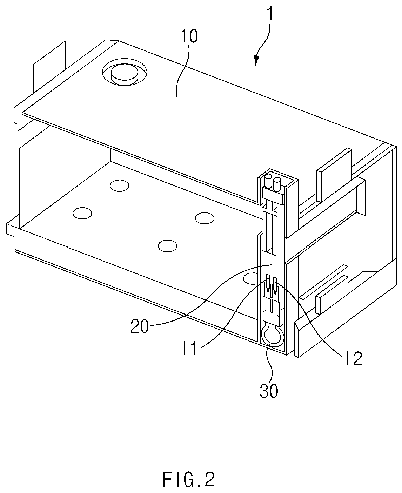

FIG. 2 is a view of the battery pack 1, taken along line A-A of FIG. 1 according to Embodiment 1 of the present invention.

Referring to FIG. 2, the battery pack 1 according to Embodiment 1 of the present invention may include the housing part 10, the connector part 20, and a cable part 30.

The plurality of batteries (not shown) may be accommodated in the internal cavity of the housing part 10. The connector part 20 may be mounted at one side of the internal cavity of the housing part 10.

The connector part 20 may be electrically connected to the plurality of batteries accommodated in the internal cavity of the housing part 10 and may combine the outputs of the plurality of batteries. Each of the plurality of batteries may be connected to the connector part 20. For example, each of the plurality of batteries may have a positive electrode (+) terminal and a negative electrode (-) terminal. Each of the positive electrode (+) terminal and the negative electrode (-) terminal of the plurality of batteries may be connected to the connector part 20, and power of the plurality of batteries may be combined using a first wire l1 and a second wire l2, which are provided in the connector part 20, as media.

The cable part 30 may be connected to one end of the connector part 20. The cable part 30 may be provided to electrically connect a pair of electrode terminals disposed on one end of the connector part 20. The cable part 30 may extend between the connector part 20 and an inner surface of the housing part 10. The cable part 30 may extend from one electrode terminal disposed on one end of the connector part 20 to the other electrode terminal disposed on one end of the connector part 20. The connector part 20 may be bent and extend from one electrode terminal toward the other electrode terminal.

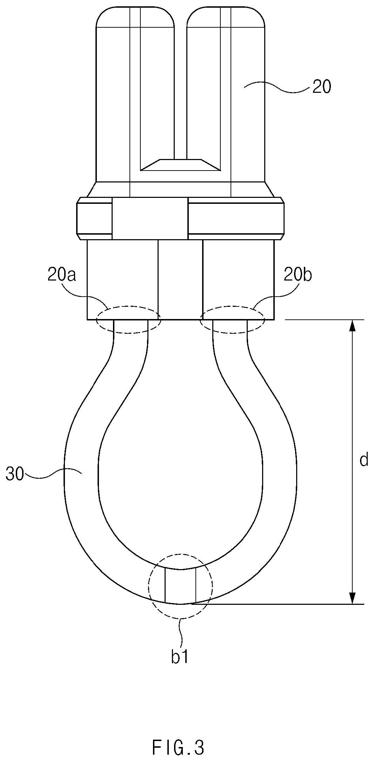

FIG. 3 is a front view illustrating the cable part 20 of the battery pack and a shape of the cable part 30 according to Embodiment 1 of the present invention.

Referring to FIG. 3, the cable part 30 may be disposed on one end of the connector part 20 according to Embodiment 1 of the present invention. The cable part 30 may be connected to one end of the connector part 20. The cable part 30 may electrically connect a pair of electrode terminals disposed on one end of the connector part 20. The pair of electrode terminals disposed on one end of the cable part 30 may include a first electrode terminal 20a and a second electrode terminal 20b. The cable part 30 may extend from the first electrode terminal 20a on one end of the connector part 20 toward the second electrode terminal 20b.

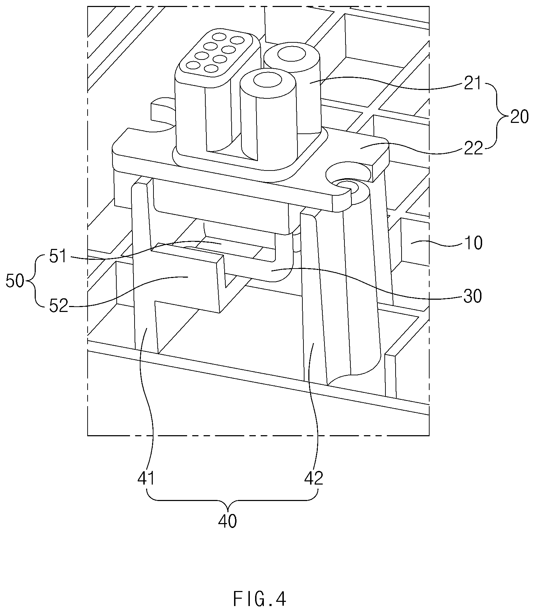

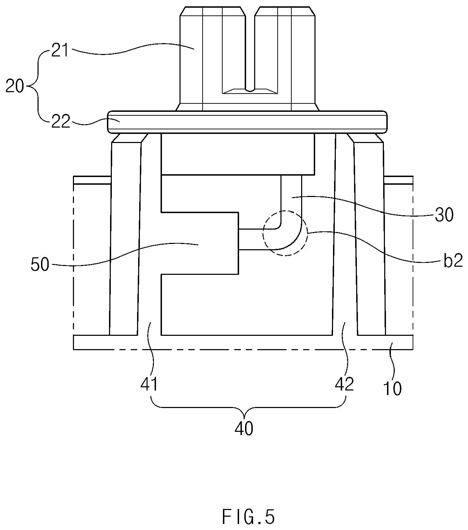

The cable part 30 may be primarily bent b1 in a process of extending from the first electrode terminal 20a toward the second electrode terminal 20b. A portion of the cable part 30 at which the primary bent portion b1 is disposed on the cable part 30 may be disposed at a position that is farthest from one end of the connector part 20. The cable part 30 may be provided to be accommodated between one end of the connector part 20 and the inner surface of the housing part. Thus, when a distance d from a portion of the cable part 30, at which the primary bent portion b1 is disposed, to one end of the connector part 20 is less than that between one end of the connector part 20 and the inner surface of the housing part, the interference between the inner surface of the housing part and the cable part 30 may be prevented. Even when the distance d from one end of the connector part 20 to a portion of the cable part 30 at which the primary bent portion b1 is disposed is greater than that between one end of the connector part 20 and the inner surface of the housing part, the interference between the inner surface of the housing part and the cable part 30 may be prevented due to the configuration of a seating part that will be described below, and this will be described in detail with reference to FIGS. 4 and 5.

FIG. 4 is a partial perspective view illustrating a state in which the cable part of the battery pack is seated on a seating part 50 according to Embodiment 1 of the present invention.

Referring to FIG. 4, the battery pack according to Embodiment 1 of the present invention may include the housing part 10, the connector part 20, the cable part 30, and the seating part 50.

The battery pack according to Embodiment 1 of the present invention may further include a connector frame 40. The connector frame 40 may be disposed inside the housing part 10. The connector frame 40 may protrude from the inner surface of the housing part 10. The connector part 20 may be mounted on the connector frame 40. The connector frame 40 may support the connector part 20. The connector part 20 may be connected to the connector frame 40. One end of the connector part 20 may be inserted into the connector frame 40. The connector part 20 may be mounted on the connector frame 40. The connector part 20 may be fixed to the connector frame 40.

The connector frame 40 may include a first frame 41 and a second frame 42. The first frame 41 and the second frame 42 may be provided to be spaced apart from each other. One surface of the first frame 41 and one surface of the second frame 42 may be disposed to face each other. The first frame 41 and the second frame 42 may protrude from the inner surface of the housing part 10, and each frame may be provided to have an overall appearance of a rectangular plate. One end of each of the first frame 41 and the second frame 42 may be connected to the inner surface of the housing part 10, and the other end may support the connector part 20. One end of the connector part 20 may be inserted between the first frame 41 and the second frame 42.

The connector part 20 may include a channel body 21 and a flange 22. A wire connected to the battery may be accommodated inside the channel body 21. The flange 22 may extend from the channel body. The flange 22 may extend to the outside of channel body 21. The flange 22 may extend from an outer surface of the channel body 21. The flange 22 may be supported by connector frame 40. The first frame 41 of the connector frame 40 may support one end of the flange 22. The second frame of the connector frame 40 may support the other end of the flange 22.

The seating part 50 may be disposed inside the housing part. The seating part 50 may be disposed between the connector part 20 and the inner surface of the housing part 10. The seating part 50 may be provided to be spaced apart from the inner surface of the housing part 10. The seating part 50 may define a space in which the cable part 30 is accommodated between one end of the connector part 20 and the inner surface of the housing part 10.

The seating part 50 may protrude from the inner surface of the connector frame 40. The seating part 50 may protrude from the inner surface of the first frame 41. The seating part 50 may protrude from one side of the first frame 41, which is opposite the second frame 42. The seating part 50 may extend from one surface of the first frame 41 toward the second frame 42.

The seating part 50 may support one side of the cable part 30. The seating part 50 may prevent the cable part 30 extending from one end of the connector part 20 from being in contact with the inner surface of the housing part 10. A portion of the cable part 30 may be supported to be in contact with one surface of the seating part 50. The cable part 30 may extend from one end of the connector part 20 and be seated on the seating part 50.

The seating part 50 may include a main support plate 51 and an edge support plate 52. The main support plate 51 may support one side of the cable part 30 so as to be spaced apart from the inner surface of the housing part 10, thereby preventing the cable part 30 from being in contact with the inner surface of the housing part 10. One surface of the main support plate 51 supporting the cable part 30 may face one end of the connector part 20. One surface of the main support plate 51 supporting the cable part 30 may be spaced a predetermined distance from one end of the connector part 20. The main support plate 51 may be provided, for example, in a shape of a rectangular plate. The main support plate 51 may be provided to be spaced a predetermined distance from the inner surface of the housing part 10. The edge support plate 52 may be disposed on both ends of the main support plate 51. The edge support plate 52 may prevent the cable part 30 disposed on the main support plate 51 from being separated. The edge support plate 52 may have a protrusion on each of both ends of the main support plate 51 to prevent the cable part 30 disposed on the main support plate 51 from being separated laterally. The edge support plate 512 may be provided to extend from each of both the ends of the main support plate 51 toward one end of the connector part 20. The edge support plate 52 may be provided to be integrated with the main support plate 51. The main support plate 51 and the edge support plate 52 may be provided in one body and protrude from one surface of the first frame 41. The first frame 41, the main support plate 51, and the edge support plate 52 may be provided in one body without separate joints.

FIG. 5 is a side view illustrating a state in which the cable part 30 of the battery pack is seated on the seating part 50 when viewed from the side according to Embodiment 1 of the present invention.

Referring to FIG. 5, the battery pack according to Embodiment 1 of the present invention may include the connector part 20, the cable part 30, the housing part 10, and the seating part 50.

The connector frame 40 may be disposed inside the housing part 10. The connector frame 40 may protrude from the inner surface of the housing part 10. The connector frame 40 may include a first frame 41 and a second frame 42. The second frame 42 may be provided to be spaced apart from the first frame 41. The connector part 20 may include a channel body 21 and a flange 22. The flange 22 may extend from an outer surface of the channel body 21 in a direction toward the outside of the channel body 21. The flange 22 may be supported by the connector frame 40, and since the flange 22 is supported by the connector frame 40, the connector part 20 may be supported by the connector frame 40. One end of the connector part 20 may be mounted and fixed to the connector frame 40.

The cable part 30 may extend from one end of the connector part 20. The cable part 30 may extend from one end of the connector part 20 and may be seated on the seating part 50. The cable part 30 may extend from one end of the connector part 20 toward the inner surface of the housing part 10. The cable part 30 extending toward the inner surface of the housing part 10 may be secondarily bent b2 in a direction toward the first frame 41. The cable part 30, which is secondarily bent b2 toward the first frame 41, may be disposed in a direction toward the seating part. The seating part 50 protruding from the first frame 41 toward the second frame 42 may accommodate a portion of the cable part 30, which is secondarily bent b2 toward the first frame 41. The portion of the cable part 30, which is accommodated in the seating part 50, may be supported by the seating part 50. The seating part 50 may support one side of the cable part 30 facing the inner surface of the housing part. A portion of the cable part 30 supported by the seating part 50 may be spaced apart from the inner surface of the housing part 10. A portion of the cable part 30 may be accommodated and supported by the seating part 50 to prevent an interference with the inner surface of the housing part 10 from occurring.

The battery pack according to Embodiment 1 of the present invention may adopt a configuration in which the seating part 50 is provided inside the housing part 10, and thus, the cable part 30 disposed inside the battery pack may be disposed to be spaced apart from the inner surface of the housing part 10, thereby significantly reducing physical abrasion such as damage or disconnection, which may occur due to the contact and interference with the inner surface of the housing part 10. Furthermore, the above-described effects may be achieved with only a simple mechanical configuration, in which the seating part 50 is disposed to protrude from the connector frame 40 supporting the connector part 20 without changing a shape of the wire of the cable part 30 or separately controlling the arrangement of the connector 20.

### Embodiment 2

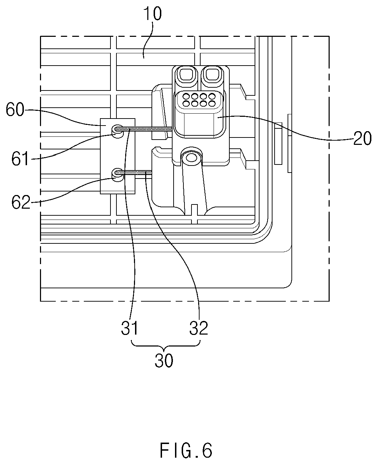

FIG. 6 is a partial perspective view of a battery pack according to Embodiment 2 of the present invention.

Embodiment 2 of the present invention may differ from Embodiment 1 in that a seating part 60 is provided in the form of a busbar. The contents in common with Embodiment 1 will be omitted as much as possible, and Embodiment 2 will be described focusing on the differences from Embodiment 1.

Referring to FIG. 6, a battery pack according to Embodiment 2 of the present invention may include a housing part 10, a connector part 20, a cable part 30, and a seating part 60.

A plurality of batteries (not shown) may be accommodated in the housing part 10. The plurality of batteries accommodated in the housing part 10 may be electrically connected so that outputs of the plurality of batteries are combined. An internal cavity in which the plurality of batteries are accommodated may be provided in the housing part 10. The connector part 20 may be mounted on the housing part 10. The connector part 20 may be mounted on the housing part 10 and may combine the outputs of the plurality of batteries accommodated inside the housing part 10. The connector part 20 may be electrically connected to each of the plurality of batteries. A first electrode terminal and a second electrode terminal (not shown) may be disposed on one end of the connector part 20.

The cable part 30 may be connected to one end of the connector part 20. The cable part 30 may extend from a pair of electrode terminals disposed on one end of the connector part 20. The cable part 30 may extend between the connector part 20 and an inner surface of the housing part 10. The cable part 30 may include a first cable 31 extending from a first electrode terminal disposed on one end of the connector part 20 and a second cable 32 extending from the second electrode terminal disposed on one end of the connector part 20.

The seating part 60 may be provided in the form of a busbar that electrically connects the first cable 31 to the second cable 32. Each of one end of the first cable 31 and one end of the second cable 32 may be connected to a busbar-shaped seating part 60. The seating part 60 may be provided, for example, in the shape of a rectangular plate. The seating part 60 may be made of a conductor (e.g., metal) to electrically connect the first cable 31 to the second cable 32. A first connection port 61 connected to one end of the first cable 31 and a second connection port 62 connected to one end of the second cable 32 may be disposed on the seating part 60. One end of each of the first cable 31 and the second cable 32 may be connected to each of the first connection port 61 and the second connection port 62 of the seating part 60 and may be fixed on the seating part 60. The seating part 60 may be mounted on an inner side of the housing part 10. The seating part 60 may be seated and fixed on the inner surface of the housing part 10.

A configuration of the cable part 30, which is divided into a first cable 31 and a second cable 32, and a configuration, in which one end of each of the first cable 31 and the second cable 32 is connected to the seating part 60 fixed to the inner surface of the housing part 10, may be adopted to significantly reduce an interference between the cable part 30 and the housing part 10, which may occur in the battery pack according to Embodiment 2 of the present invention. One end of each of the first cable 31 and the second cable 32 of the cable part 30 may be electrically connected through the seating part 60 without being in contact with the inner surface of the housing part 10. One end of each of the first cable 31 and the second cable 32 may be fixed to the seating part 60, and the other end of each of the first cable 31 and the second cable 32 may be connected to one end of the connector part 20. Since the seating part 60 is fixed to the inner surface of the housing part 10 in the form of a busbar, the positions of the first cable 31 and the second cable 32 may be firmly fixed without any clearance. Thus, positional movement of the cable part 30 due to an external impact, etc. may be prevented, and electrical errors due to abrasion and damage of the cable part 30 may be significantly reduced.

The present invention may be provided as a battery device including the battery pack reviewed above as a power source.

In the above description, although the present invention has been described by limited embodiments and drawings, the above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment. Therefore, the scope of the present invention is defined not by the detailed description of the invention but by the appended claims, and all differences within the scope will be construed as being comprised in the present invention.

### [Description of the Symbols]

1: Battery pack
10: Housing part
11: Connector guard
20: Connector part
20a: First electrode terminal
20b: Second electrode terminal
21: Channel body
22: Flange
30: Cable part
40: Connector frame
41: First frame
42: Second frame
50: Seating part
51: Main support plate
52: Edge support plate
60: Seating part
61: First connection port
62: Second connection port
b1: First bent portion
b2: Second bent portion
l1: First wire
l2: Second wire

## Claims

1. A battery pack comprising:
a cable part;
a connector part having one end to which the cable part is connected;
a housing part on which the connector part is mounted; and
a seating part configured to fix a position of the cable part,
wherein the cable part extends between the connector part and an inner surface of the housing part, and
the seating part is disposed inside the housing part and configured to support one side of the cable part that faces the inner surface of the housing part so as to prevent an interference between the inner surface of the housing part and the cable part.

2. The battery pack of claim 1, wherein the cable part is seated on the seating part and is spaced apart from the inner surface of the housing part.

3. The battery pack of claim 1, further comprising a connector frame protruding from the inner surface of the housing part and configured to support one end of the connector part.

4. The battery pack of claim 3, wherein the connector part comprises:
a channel body through which a wire connected to the battery passes; and
a flange extending from an outer surface of the channel body to overlap the connector frame so as to be supported by the connector frame.

5. The battery pack of claim 3, wherein the seating part protrudes from an inner surface of the connector frame.

6. The battery pack of claim 4, wherein the connector frame comprises:
a first frame configured to support one end of the flange; and
a second frame configured to support the other end of the flange.

7. The battery pack of claim 6, wherein the seating part protrudes from one surface of the first frame in a direction facing the second frame.

8. The battery pack of claim 7, wherein the seating part is spaced a predetermined distance from the inner surface of the housing part.

9. The battery pack of claim 6, wherein the cable part extends from one end of the connector part so as to be bent in a direction facing the first frame and is supported by one surface of the seating part facing the connector part.

10. The battery pack of claim 2, wherein the seating part comprises:
a main support plate that is in contact with a portion of the cable part to support the cable part so that the cable part is spaced apart from the inner surface of the housing part; and
an edge support plate disposed on each of both ends of the main support plate to prevent the cable part from being separated laterally from the cable part.

11. A battery pack comprising:
a connector part having one end on which a first electrode terminal and a second electrode terminal are provided;
a cable part comprising a first cable extending from the first electrode terminal and a second cable extending from the second electrode terminal;
a housing part on which the connector part is mounted; and
a seating part configured to electrically connect the first cable to the second cable and fix a position of the cable part,
wherein the cable part extends between the connector part and the seating part.

12. The battery pack of claim 11, wherein the seating part comprises a busbar mounted on an inner surface of the housing part.

13. A battery device comprising the battery pack according to claim 1 as a power source.
